# FASCICULE DE BREVET EUROPEEN

(11) **EP 3 835 882 B1**
(45) Date de publication et mention de la délivrance du brevet: **05.11.2025**
(21) Numéro de dépôt: 19214883.1
(22) Date de dépôt: 10.12.2019
(51) Int. Cl.: G04B 31/008, G04B 31/06, G04D 3/00, C04B 35/00, B28B 3/02, B28B 3/08, C04B 35/48

(54) **PIERRE, NOTAMMENT POUR UN MOUVEMENT D'HORLOGERIE, ET SON PROCÉDÉ DE FABRICATION**
STEIN, INSBESONDERE FÜR EIN UHRWERK, UND SEIN HERSTELLUNGSVERFAHREN
JEWEL, PARTICULARLY FOR CLOCKWORK, AND METHOD FOR MANUFACTURING THE SAME

(43) Date de publication de la demande: 16.06.2021
(73) Titulaire: Comadur S.A., 2400 Le Locle (CH)
(72) Inventeur: BESUTTI, Bruno, 25140 Charquemont (FR); RETROUVEY, Sébastien, 39380 Chissey sur Loue (FR)
(74) Mandataire: ICB SA

(56) Documents cités:
- EP-A1- 3 483 665
- CH-A- 149 141

## Description

### Domaine de l'invention

L'invention porte sur un procédé de fabrication d'une pierre, notamment pour un mouvement d'horlogerie, par exemple une pierre industrielle ou une céramique technique. L'invention porte encore sur un dispositif de pressage pour la mise en œuvre du procédé.

### Arrière-plan de l'invention

Dans l'état de la technique de l'horlogerie, les pierres de type rubis, ZrO2 ou saphir, sont notamment utilisées pour former des contre-pivots ou des éléments de guidage, appelés coussinets, dans des pièces d'horlogerie. Ces contre-pivots et éléments de guidage sont destinés à entrer en contact avec des pivots afin de rendre ces derniers mobiles en rotation et ce, avec un frottement minimal. Ainsi, ils forment, par exemple, tout ou partie d'un palier d'un axe monté en rotation. Les éléments de guidage comprennent généralement un trou traversant pour y insérer l'axe du pivot.

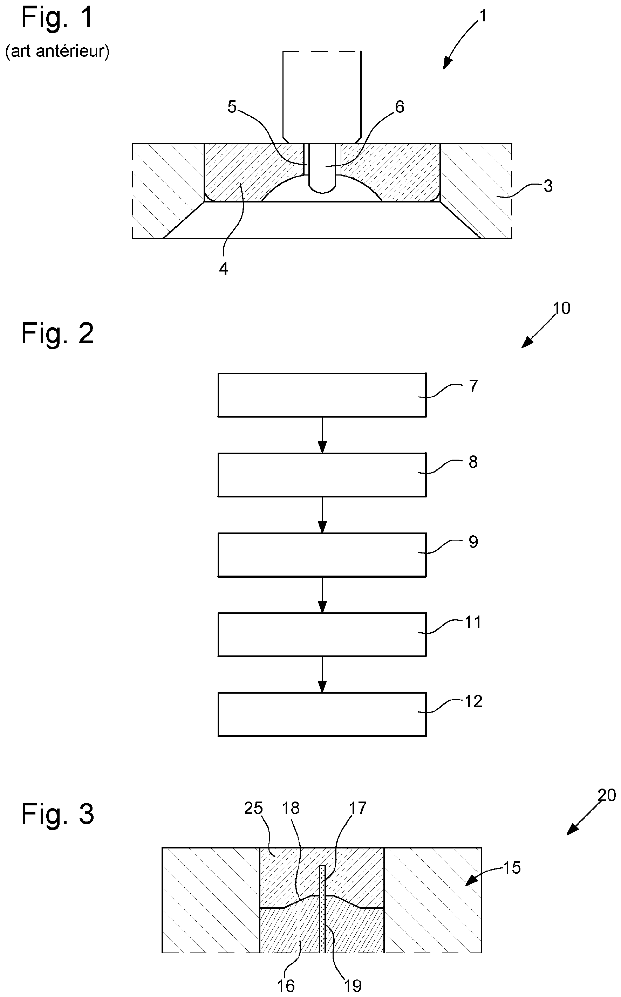

La figure 1 est une représentation d'un palier 1 pour un pivot 2 d'un mobile tournant selon l'art antérieur. Le palier 1 comprend un bloc de palier 3, dans lequel est agencé un élément de guidage 4, qui est ici une pierre. La pierre comporte un trou traversant 5 pour recevoir l'extrémité 6 du pivot 2. Ainsi, le pivot 2 peut tourner dans le trou 5.

En principe, on utilise des pierres industrielles synthétiques dans les mouvements horlogers. On connait en particulier le procédé de type Verneuil pour fabriquer des pierres de type monocristalline.

Il existe aussi les pierres de type poly-cristalline, que l'on fabrique par pressage d'un précurseur en vue de l'obtention d'un corps vert de la future pierre à partir d'un outil de pressage. Les pierres sont ensuite frittées, usinées pour obtenir une forme finie aux dimensions désirées. En particulier, concernant les éléments de guidage en pierre poly-cristalline, l'outil de pressage est par exemple pourvu d'un fil participant à l'édification d'une ébauche de trou. Un exemple de ce type de procédé de fabrication de pierre de type poly-cristalline munie d'un trou est décrit dans la demande de brevet EP 3 483 665.

Cependant, ces techniques d'usinage de ces pierres poly-cristallines, ne permettent pas d'obtenir des trous de petite dimensions. En particulier, on peut aller jusqu'à des diamètres de 0.11mm, grâce aux techniques usuelles connues aujourd'hui. Mais il n'est pas possible de descendre en-dessous de cette valeur. Pour pouvoir descendre en-dessous, il faut avoir recours à des technologies laser, qui sont difficiles à mettre en œuvre industriellement, et qui ne permettent pas d'avoir directement un état de surface de qualité du trou.

### Résumé de l'invention

Le but de la présente invention est de palier tout ou partie les inconvénients cités précédemment, en proposant un procédé de fabrication d'une pierre à grande échelle permettant la réalisation d'un trou de très petit diamètre.

A cet effet, l'invention porte sur un procédé de fabrication d'un corps, dit de type corps vert, en vue de l'obtention d'une pierre de type poly-cristalline, notamment pour une pièce d'horlogerie, la pierre comprenant par exemple du poly-rubis de type al2O3Cr ou de la céramique Zircone de type ZrO2, le procédé comprenant une première étape de réalisation d'un précurseur.

Le procédé est remarquable en ce qu'il comprend une deuxième étape de pressage du précurseur afin de former un corps, le pressage étant opéré à l'aide d'un dispositif de pressage muni d'une matrice supérieure et d'une matrice inférieure définissant un espace de pressage dans lequel le précurseur est disposé, la matrice supérieure comprenant une portion concave de forme oblongue, le dispositif étant muni d'un fil traversant au moins en partie la matrice inférieure pour déboucher dans l'espace de pressage, la matrice inférieure pouvant coulisser autour du fil, le pressage étant opéré par le rapprochement de la matrice inférieure et de la matrice supérieure pour former un corps comprenant une face supérieure munie d'un dôme et une face inférieure munie d'un trou s'étendant au moins en partie dans le dôme.

Ainsi, ce procédé permet de former des corps verts, qui, après frittage et usinage, donneront des pierres avec un trou de très petit diamètre, notamment inférieur ou égal à 0.1mm. Ce procédé est en outre mis en œuvre par un dispositif de pressage facile à utiliser, le dispositif de pressage utilisé étant un perfectionnement d'un dispositif classique pour la fabrication d'un corps vert. L'invention permet donc de fabriquer ces pierres industriellement à grande échelle, sans avoir recours à des systèmes onéreux et compliqués à mettre en œuvre.

Selon un mode de réalisation particulier de l'invention, l'étape de pressage est effectuée par le déplacement de la matrice inférieure vers la matrice supérieure autour du fil fixe.

Selon un mode de réalisation particulier de l'invention, lors du pressage, une creusure circulaire est formée dans la face supérieure du corps autour du dôme, la matrice supérieure étant munie d'une collerette délimitant la portion concave.

Selon un mode de réalisation particulier de l'invention, la matrice supérieure se déplace vers le haut sous l'effet de celui de la matrice inférieure, le déplacement de la matrice supérieure étant inférieur à celui de la matrice inférieure.

Selon un mode de réalisation particulier de l'invention, le procédé comprend une troisième étape de frittage dudit corps afin de former le corps minéral.

Selon un mode de réalisation particulier de l'invention, le procédé comprend une quatrième étape d'usinage pour enlever une partie supérieure du dôme du corps minéral, afin d'obtenir un trou traversant la pierre.

Selon un mode de réalisation particulier de l'invention, le procédé comprend une cinquième étape de finition, par exemple un rodage et/ou un brossage et/ou un polissage du corps minéral.

L'invention porte encore sur un dispositif de pressage pour la fabrication d'une pierre, notamment pour une pièce d'horlogerie, le dispositif comprenant un carter définissant un logement, une matrice supérieure et une matrice inférieure configurées pour pouvoir se déplacer dans le logement, les matrices définissant un espace de pressage dans lequel un précurseur peut être disposé, la matrice supérieure comprenant une collerette, le dispositif étant muni d'un fil traversant au moins en partie la matrice inférieure pour déboucher dans l'espace de pressage, le fil étant fixe par rapport à la matrice inférieure et centré sur la collerette de la matrice supérieure, la matrice inférieure comprenant un orifice de réception du fil, la matrice étant apte à coulisser autour du fil.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation schématique d'un palier pour pivot selon un mode de réalisation connu de l'état de l'art ;
- la figure 2 est un schéma synoptique d'un procédé de réalisation d'une pierre selon l'invention ;
- la figure 3 est une représentation schématique d'une partie d'un dispositif de pressage selon l'invention ;
- la figure 4 est une représentation schématique de la partie de la figure 4 avec le précurseur ;
- la figure 5 est une représentation schématique du dispositif de pressage selon l'invention ;
- la figure 6 est une représentation schématique du dispositif de pressage selon l'invention pendant le pressage ;
- la figure 7 est une représentation schématique d'un corps vert obtenu après l'étape de pressage grâce au procédé selon l'invention ;
- la figure 8 est une représentation schématique d'un corps minéral obtenu après une partie de l'étape d'usinage grâce au procédé selon l'invention ;
- la figure 9 est une représentation schématique d'une pierre obtenue grâce au procédé selon l'invention ;
- la figure 10 est une représentation schématique d'un système de fabrication d'une pierre comprenant un dispositif de pressage selon l'invention.

### Description détaillée des modes de réalisation préférés

Comme expliqué ci-dessus, l'invention se rapporte à un procédé de fabrication 10 d'une pierre susceptible de former un élément de guidage d'une pièce d'horlogerie. La pierre est par exemple destinée à entrer en contact avec un pivot, appelé également tourillon, par exemple d'un axe de balancier, afin de rendre ce dernier mobile en rotation avec un frottement minimal. On comprend donc que la présente invention permet notamment de réaliser une pierre pouvant former tout ou partie d'un palier d'un axe monté en rotation, tel que celui représenté sur la figure 1.

La pierre est formée à partir d'un précurseur, modelé en corps vert, qui devient un corps minéral de type poly-cristallin pour le saphir, le corps comprenant par exemple du poly-rubis de type al2O3Cr ou de la céramique Zircone de type ZrO2. Le corps minéral est taillé pour devenir la pierre finale.

Dans le mode de réalisation 5 du procédé, représenté sur la figure 2, un tel procédé comporte une première étape 7 de réalisation d'un précurseur à partir d'un mélange d'au moins un matériau en poudre avec un liant. Ce matériau peut être, de manière non limitative et non exhaustive, de la céramique. Cette étape 7 est destinée à former un précurseur à partir d'une poudre à base de céramique prise dans le liant.

Dans ce contexte, la poudre à base de céramique peut comporter au moins un oxyde métallique, un nitrure métallique ou un carbure métallique. A titre d'exemple, la poudre à base de céramique peut comporter de l'oxyde d'aluminium afin de former du saphir synthétique ou un mélange d'oxyde d'aluminium et d'oxyde de chrome afin de former du rubis synthétique, ou encore de l'oxyde de zirconium. De plus, le liant peut être de natures variées comme, par exemple, de types polymères ou de types organiques.

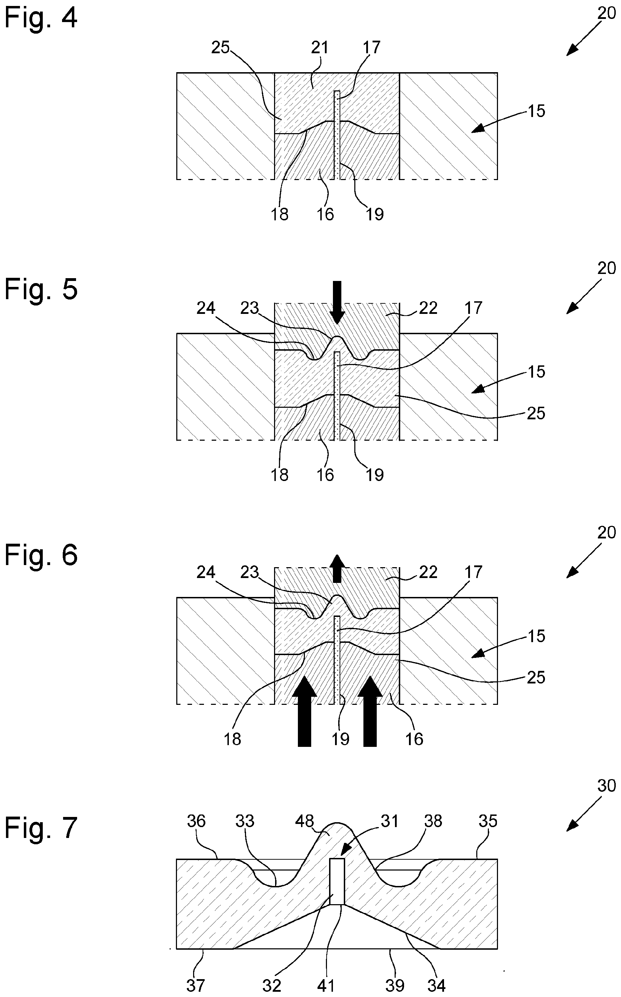

Le mode de réalisation comporte ensuite une deuxième étape de pressage 8 du précurseur à partir d'une matrice supérieure et d'une matrice inférieure d'un dispositif de pressage, afin de former un corps vert de la future pierre. L'étape de pressage est représentée sur les figures 4 à 7, qui sont décrites plus loin dans la description. L'étape de pressage 8 permet d'obtenir un corps vert muni d'un dôme et d'un trou s'étendant au moins en partie à l'intérieur du dôme. On comprend donc que la forme du dôme est apportée par la portion concave 23 de la matrice supérieure 22, et la forme du trou est apportée par la forme du fil 17 de la matrice inférieure 16 du dispositif de pressage 20.

Le procédé comprend une troisième étape de frittage 9 dudit corps vert afin de former le corps minéral de la future pierre dans ledit au moins un matériau. Le matériau peut être, ainsi que nous l'avons évoqué précédemment, de la céramique. Autrement dit, cette étape 9 est destinée à fritter le corps vert afin de former un corps en céramique de la future pierre percée. Préférentiellement selon l'invention, l'étape de frittage 9 peut comporter une pyrolyse, par exemple par déliantage thermique.

Le procédé 10 comprend une quatrième étape d'usinage 11, notamment pour enlever une partie du dôme du corps minéral, afin d'obtenir un trou traversant la pierre. L'usinage consiste à raboter la partie supérieure du dôme. Ainsi, en supprimant la partie supérieure, on ouvre le trou dans la face supérieure du corps vert pour obtenir un trou traversant. L'étape d'usinage 11 comprend aussi une sous-étape de façonnage de la face supérieure et de la face inférieure pour obtenir une épaisseur de pierre prédéfinie.

Le procédé comprend une cinquième étape de finition 12, par exemple un rodage et/ou un brossage et/ou un polissage du corps minéral. Cette finition permet de donner à la pierre un état de surface compatible avec son utilisation. Une telle étape de finition permet aussi l'ajustage des cotes finales et/ou le retrait d'arêtes et/ou la modification locale de la rugosité.

Sur les figures 3 à 6, le dispositif de pressage 20 comprend un carter 15 muni d'une chambre, à l'intérieur de laquelle une matrice supérieure 22 et une matrice inférieure 16 peuvent coulisser. Chaque matrice 16, 22 est fixée sur une presse double effet. La matrice supérieure 22 et la matrice inférieure 16 définissent un espace de pressage 25 dans lequel le précurseur 21 est disposé.

Sur les figures 3 et 4, seule la matrice inférieure 16 est représentée. Le dispositif 10 est en outre muni d'un fil traversant 17 au moins en partie la matrice inférieure 16 pour déboucher dans l'espace de pressage 25. Le fil 17 est fixe par rapport à la matrice inférieure 16 et centré sur la matrice inférieure 16. La matrice inférieure 16 comprend un orifice de passage 19 du fil 17. Ainsi, la matrice inférieure 16 coulisse autour du fil 17. Le fil 17 est donc immobile par rapport à la matrice inférieure 16.

La matrice inférieure 16 est en outre munie d'une partie bombée 18, de préférence de forme conique avec un grand angle d'ouverture, par exemple compris dans un intervalle allant de 60° à 140°, de préférence compris entre 90° et 120°. La partie bombée 18 est centrée sur la matrice inférieure 16, de sorte que le passage 19 et donc le fil 17 soient agencés au sommet de la partie bombée 18.

Le précurseur 21 est positionné dans l'espace de pressage 25, comme le montre la figure 4. Puis, on positionne la matrice supérieure 22 dans le logement sur le précurseur 21.

La matrice supérieure 22 comprend une portion concave 23 oblongue. La portion concave 23 est centrée sur l'axe de la matrice supérieure 22. La portion concave 23 a de préférence une forme conique de base circulaire, le sommet du cône définissant le fond de la portion concave 23. Le fond de la portion concave a par exemple une forme arrondie. Le cône a par exemple un angle d'ouverture compris dans un intervalle allant de 30 à 90°, de préférence de 50 à 70°, voire de 60°.

La matrice supérieure 22 est en outre munie d'une collerette 24 délimitant la portion concave 23. La collerette 24 est circulaire et a de préférence un profil sensiblement arrondi. Ainsi, lors du pressage, une creusure circulaire est formée dans la face supérieure du corps vert autour de la portion concave. Le diamètre minimal de la collerette 24 est supérieur à celui de la base circulaire de la portion concave 23. De préférence, le diamètre minimal correspond à celui de la base circulaire de la portion concave 23. Ainsi, la creusure 33 formée dans la face supérieure 36 borde la circonférence de la portion concave 23. La paroi interne 38 de la creusure 33 forme la base de la portion concave 23.

Le pressage 8 est opéré par le rapprochement de la matrice supérieure 22 et de la matrice inférieure 16, de manière à comprimer le précurseur 21 dans l'espace de pressage 25. De préférence, le pressage 8 est effectué par le déplacement de la matrice inférieure 16 vers la matrice supérieure 22 autour du fil fixe 17. Ainsi, le précurseur 21 est tassé contre la matrice supérieur 22 pour donner au corps vert une forme correspondant à l'espace de pressage 25 une fois les deux matrices 16, 22 rapprochées. Le corps vert prend donc la forme des matrices supérieure 22 et inférieure 16 pour les faces supérieure 36 et inférieure 37 du corps.

Ainsi, une telle étape de pressage 8 est destinée à compresser le précurseur 21 afin de former le corps vert de la future pierre percée avec un dôme sur la face supérieure et un trou sur la face inférieure.

De préférence, la matrice supérieure 22 se déplace sous l'effet de la pression de la matrice inférieure 16, le déplacement de la matrice supérieure 22 étant inférieur à celui de la matrice inférieure. Ainsi, on réduit le risque de rupture du fil 17 pendant le pressage 8.

La figure 7 montre le corps vert 30 ainsi obtenu. Le corps vert 30 comprend une face supérieure 36 munie d'un dôme 31 et d'une creusure 33 autour du dôme 31. Le dôme 31 a, de préférence, une forme conique de base circulaire correspondant à celle de la portion concave 23 de la matrice supérieure 16. Le dôme 31 est proéminent de la face supérieure 36. Autrement dit, il s'étend au moins en partie au-delà du reste de la face supérieure 36. Au-delà de la creusure 33, la face supérieure 36 du corps vert comprend une surface circonférentielle 35 sensiblement plane, dont la hauteur est inférieure à celle du dôme 31, mais supérieure à la creusure 33.

Le corps vert 30 comprend une face inférieure 37 munie d'un trou 32. Le trou 32 a été formé par le fil pendant le pressage. Le trou 32 a une forme cylindrique. Le trou 32 a une profondeur choisie pour qu'il s'étende à travers la pierre au moins en partie dans le dôme 31. La profondeur est par exemple choisie pour aller au-delà du fond de la creusure 33, depuis la face inférieure 37. A ce stade, le trou 32 n'est pas traversant, mais comporte un fond disposé dans le dôme 31. Grâce au procédé, on obtient un trou 32 de très petit diamètre, qui peut notamment être inférieur à 0.1mm, voire inférieur à 0.05mm.

La face inférieure 37 du corps vert 30 est dotée d'une partie évasée 34, la partie évasée 34 bordant le trou 32. La partie évasée 34 a une forme conique. Cet évasement forme alors un cône d'engagement de la pierre percée 40. Le cône 12 est de préférence circulaire. Le cône a une première ouverture 39 à sa base et une deuxième ouverture 41 à son sommet. La première ouverture 39 est plus grande que la deuxième 41, et est formée dans la face inférieure 37 du corps 30. La liaison du cône 34 et du trou 32 s'effectue par la deuxième ouverture 41 pour former une arête. Ainsi, l'évasement 34 permet d'insérer facilement le pivot d'un axe d'une pièce mobile en rotation, notamment en cas de choc. L'angle du cône est choisi pour éviter que l'arête formée par le haut du cône et le trou 8 ne soit trop saillante. On choisit par exemple un angle compris entre 60° et 140°, de préférence compris entre 90° et 120°.

Le corps vert 30 une fois formé, est soumis à l'étape de frittage pour obtenir un corps minéral, qui conserve une forme identique.

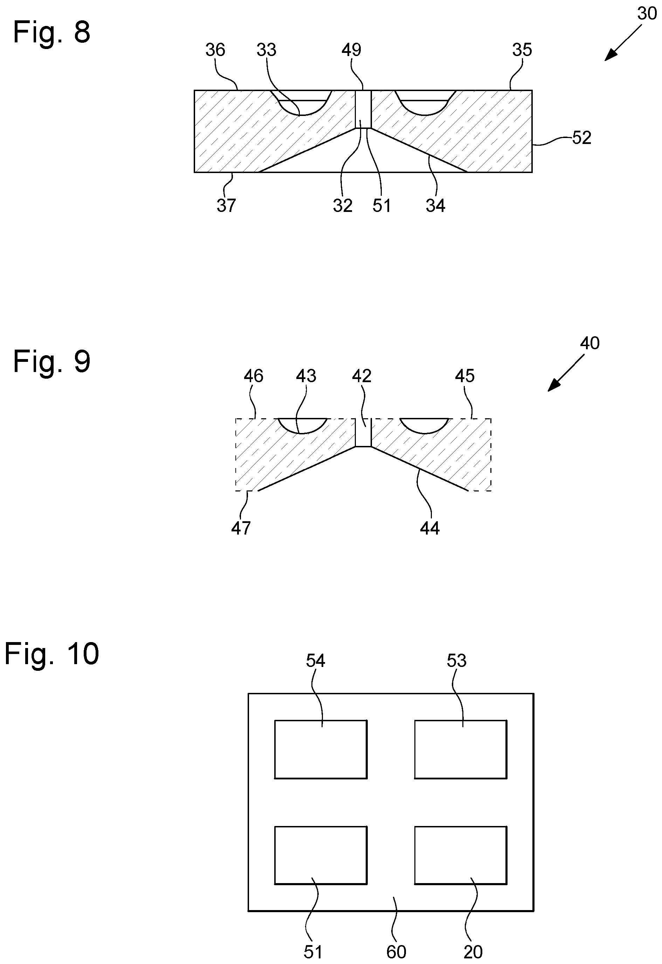

La figure 8 montre le corps minéral 30 après une partie de l'étape d'usinage 11, pendant laquelle la partie supérieure 48 du dôme 31 a été enlevée pour obtenir un trou traversant 32. Le corps minéral 30 est pourvu des faces supérieure 36 et inférieure 37 qui sont de formes différentes. En effet, la face inférieure 37 a une forme conique bordant le trou 32, tandis que la face supérieure 36 a une creusure autour du trou 32. Un tel trou traversant 32 comprend une première ouverture 49 définie dans le corps minéral et débouchant dans la face inférieure 37. Le trou traversant 32 comprend aussi une seconde ouverture 51 définie dans le corps minéral 30 et débouchant dans la face supérieure 36. Une telle pierre a, par exemple, une épaisseur de 0.18mm et un diamètre de 0.8mm, et un trou de diamètre inférieur à 0.1mm. De telles dimensions permettent d'utiliser des pivots de très faible diamètre. De préférence, la face supérieure 36 entière a une hauteur identique. Ainsi, la face supérieure 36 du corps est plane, en-dehors du trou 32 et de la creusure 33. On peut aussi enlever de la matière de la surface circonférentielle 35, pour obtenir une épaisseur de pierre souhaitée.

L'étape d'usinage 11 peut aussi comprendre une sous-étape de rabotage de la face périphérique 52 du corps minéral 30, afin de lui donner un diamètre déterminé. L'étape d'usinage 11 peut aussi comprendre une sous-étape de rabotage de la face inférieure 37, voire d'élargissement ou de taillage du trou 32.

La figure 9 montre un exemple de pierre 40 obtenue après toutes les étapes du procédé 10. Une telle pierre 40 peut être utilisée comme élément de guidage monté dans un palier, tel que celui de la figure 1. Toutefois, une telle pierre ne saurait se limiter au domaine horloger et peut s'appliquer à tout élément monté mobile par rapport à un palier, ou à une pierre industrielle (buse jet d'eau, etc.), ou une céramique technique (isolateur, etc.). La pierre 40 comprend les caractéristiques décrites dans le procédé précédemment. La pierre 40 est traversée par un trou 42 destiné à recevoir un pivot. La pierre 40 comporte une surface supérieure 46 et une surface inférieure 47 dont l'une comprend un élément fonctionnel, ici un cône 44, communiquant avec le trou traversant 42. La face supérieure 36 comprend une creusure 43 et l'autre côté du trou traversant 42. Autrement dit, le trou 42 communique avec la face supérieure 46 et avec la face inférieure 47.

Bien entendu, la présente invention ne se limite pas à l'exemple illustré mais est susceptible de diverses variantes et modifications qui apparaîtront à l'homme de l'art. En particulier, d'autres types d'éléments fonctionnels formés lors de l'étape de pressage peuvent être envisagés avantageusement selon l'invention telle que définie aux revendications annexées.

En référence à la figure 10, l'invention porte aussi sur un système de fabrication 60 de la pierre. Ce système 60 comprend les différents dispositifs suivants :
- un dispositif de réalisation 51 d'un précurseur à partir d'un mélange d'au moins un matériau en poudre avec un liant ;
- un dispositif de pressage 20 du matériau précurseur tel que défini précédemment ;
- un dispositif de frittage 53 dudit corps vert, et
- un dispositif d'usinage 54 du corps 30 de la future pierre 8 issu du frittage du corps vert.

On notera qu'au moins deux de ces dispositifs 20, 51, 53 et 54 peuvent former ensemble une même entité du système 60. Un tel système 60 est apte à mettre en œuvre le procédé de fabrication de la pierre 40 représentée sur la figure 9, en passant par les étapes de la figure 2.

## Revendications

1. Procédé (10) de fabrication d'un corps (30), dit de type corps vert, en vue de l'obtention d'une pierre (40) de type poly-cristalline, notamment pour une pièce d'horlogerie, la pierre (40) comprenant par exemple du poly-rubis de type al2O3Cr ou de la Zircone de type ZrO2, le procédé comprenant une première étape de réalisation (7) d'un précurseur (21), ledit procédé comprenant une deuxième étape de pressage (8) du précurseur (21) afin de former ledit corps (30), le pressage (8) étant opéré à l'aide d'un dispositif de pressage (20) muni d'une matrice supérieure (22) et d'une matrice inférieure (16) définissant un espace de pressage (25) dans lequel le précurseur (21) est disposé, la matrice supérieure (22) comprenant une portion concave (23) de forme oblongue, le dispositif étant muni d'un fil (17) traversant au moins en partie la matrice inférieure (16) pour déboucher dans l'espace de pressage (25), la matrice inférieure (16) pouvant coulisser autour du fil (17), le pressage (8) étant opéré par le rapprochement de la matrice inférieure (16) et de la matrice supérieure (22) pour former ledit corps corps (30) comprenant une face supérieure (36) munie d'un dôme (31) et une face inférieure (37) munie d'un trou (32) s'étendant au moins en partie dans le dôme (31).

2. Procédé selon la revendication 1, **caractérisé en ce que** le pressage (8) est opéré par le déplacement de la matrice inférieure (16) vers la matrice supérieure (22).

3. Procédé selon la revendication 1 ou 2, **caractérisé en ce que** lors du pressage (8), une creusure circulaire (33) est formée dans la face supérieure (36) du corps (30) autour du dôme (31), la matrice supérieure (22) étant munie d'une collerette (24) délimitant la portion concave (23).

4. Procédé selon l'une, quelconque, des revendications précédentes, **caractérisé en ce que** la matrice supérieure (22) se déplace vers le haut sous l'effet de celui de la matrice inférieure (16), le déplacement de la matrice supérieure (22) étant inférieur à celui de la matrice inférieure (16).

5. Procédé selon l'une, quelconque, des revendications précédentes, **caractérisé en ce que** le procédé (10) comprend une troisième étape de frittage (9) dudit corps (30) afin de former un corps minéral.

6. Procédé selon la revendication 5, **caractérisé en ce que** le procédé (10) comprend une quatrième étape d'usinage (11) pour enlever une partie supérieure (48) du dôme (31) du corps (30), afin d'obtenir un trou (32) traversant.

7. Procédé selon la revendication 6, **caractérisé en ce que** le procédé (10) comprend une cinquième étape de finition (12), par exemple un rodage et/ou un brossage et/ou un polissage du corps minéral.

8. Dispositif de pressage (20) pour la fabrication d'une pierre (30), notamment pour une pièce d'horlogerie, le dispositif (60) comprenant une matrice supérieure (22) et une matrice inférieure (16) configurées pour pouvoir se déplacer dans un logement, les matrices (16, 22) définissant un espace de pressage (25) dans lequel un précurseur (21) peut être disposé, le dispositif (20) étant muni d'un fil (17) traversant au moins en partie la matrice inférieure (16) pour déboucher dans l'espace de pressage, la matrice inférieure (16) pouvant coulisser autour du fil (17), la matrice supérieure comportant une portion concave (23).

## Patentansprüche

1. Verfahren (10) zur Herstellung eines Körpers (30), eines sogenannten Grünkörpers, zur Erlangung eines polykristallinen Steins (40), insbesondere für eine Uhrenkomponente, wobei der Stein (40) beispielsweise polykristallinen Rubin vom Typ Al2O3Cr oder Zirkonoxid (ZrO2) umfasst, wobei das Verfahren einen ersten Schritt (7) zur Bereitstellung eines Prekursors (21) umfasst, und wobei das Verfahren einen zweiten Pressschritt (8) des Prekursors (21) umfasst, um den genannten Körper (30) zu formen, wobei das Pressen (8) mittels einer Pressvorrichtung (20) durchgeführt wird, die eine obere Matrize (22) und eine untere Matrize (16) aufweist, welche gemeinsam einen Pressraum (25) definieren, in dem der Prekursor (21) angeordnet ist, wobei die obere Matrize (22) einen konkaven Abschnitt (23) mit länglicher Form aufweist, wobei die Vorrichtung mit einem Stift (17) versehen ist, der zumindest abschnittsweise die untere Matrize (16) durchdringt und in den Pressraum (25) einmündet, wobei die untere Matrize (16) um den Stift (17) herum gleitend geführt ist, und wobei das Pressen (8) durch Zusammenfahren der unteren Matrize (16) mit der oberen Matrize (22) erfolgt, um den genannten Körper (30) zu bilden, der eine Oberseite (36) mit einer Kuppel (31) und eine Unterseite (37) mit einem Loch (32) aufweist, das sich zumindest teilweise in die Kuppel (31) hinein erstreckt.

2. Verfahren nach Anspruch 1, **dadurch gekennzeichnet, dass** das Pressen (8) durch Verschieben der unteren Matrize (16) in Richtung der oberen Matrize (22) erfolgt.

3. Verfahren nach Anspruch 1 oder 2, **dadurch gekennzeichnet, dass** beim Pressen (8) in der Oberseite (36) des Körpers (30) um die Kuppel (31) herum eine kreisförmige Vertiefung (33) ausgebildet wird, wobei die obere Matrize (22) mit einem Flansch (24) versehen ist, der den konkaven Abschnitt (23) begrenzt.

4. Verfahren nach einem der vorhergehenden Ansprüche, **dadurch gekennzeichnet, dass** sich die obere Matrize (22) infolge der Bewegung der unteren Matrize (16) nach oben bewegt, wobei der Hub der oberen Matrize (22) geringer ist als der Hub der unteren Matrize (16).

5. Verfahren nach einem der vorhergehenden Ansprüche, **dadurch gekennzeichnet, dass** das Verfahren (10) einen dritten Schritt der Sinterung (9) des genannten Körpers (30) umfasst, um einen mineralischen Körper zu bilden.

6. Verfahren nach Anspruch 5, **dadurch gekennzeichnet, dass** das Verfahren (10) einen vierten Bearbeitungsschritt (11) umfasst, in dem ein oberer Abschnitt (48) der Kuppel (31) des Körpers (30) abgetragen wird, um ein Durchgangsloch (32) zu erhalten.

7. Verfahren nach Anspruch 6, **dadurch gekennzeichnet, dass** das Verfahren (10) eine fünfte Endbearbeitungsstufe (12) umfasst, beispielsweise Läppen und/oder Bürsten und/oder Polieren des mineralischen Körpers.

8. Pressvorrichtung (20) zur Herstellung eines Steins (30), insbesondere für eine Uhrenkomponente, wobei die Vorrichtung (60) eine obere Matrize (22) und eine untere Matrize (16) umfasst, die so ausgebildet sind, dass sie in einer Führung verschiebbar sind, wobei die Matrizen (16, 22) gemeinsam einen Pressraum (25) definieren, in dem ein Prekursor (21) angeordnet werden kann, wobei die Vorrichtung (20) mit einem Stift (17) versehen ist, der zumindest abschnittsweise die untere Matrize (16) durchdringt und in den Pressraum einmündet, wobei die untere Matrize (16) um den Stift (17) herum gleitend geführt ist, und wobei die obere Matrize einen konkaven Abschnitt (23) aufweist.

## Claims

1. A method (10) for manufacturing a body (30), referred to as a green body, to obtain a poly-crystalline-type jewel (40), in particular for a timepiece, the jewel (40) comprising, for example, poly-ruby of the Al2O3Cr type or Zirconia of the ZrO2 type, the method comprising a first step (7) of producing a precursor (21), said method comprising a second step (8) of pressing the precursor (21) in order to form a body (30), the pressing (8) being carried out using a pressing device (20) provided with an upper die (22) and a lower die (16) defining a pressing space (25) wherein the precursor (21) is disposed, the upper die (22) comprising a concave portion (23) of oblong shape, the device being provided with a wire (17) at least partially traversing the lower die (16) to open into the pressing space (25), the lower die (16) being able to slide around the wire (17), the pressing (8) being carried out by bringing the lower die (16) and the upper die (22) closer together to form said body (30) comprising an upper face (36) provided with a dome (31) and a lower face (37) provided with a hole (32) extending at least partially into the dome (31).

2. The method according to claim 1, **characterised in that** the pressing (8) is carried out by displacing the lower die (16) towards the upper die (22).

3. The method according to claim 1 or 2, **characterised in that** during pressing (8), a circular recess (33) is formed in the upper face (36) of the body (30) around the dome (31), the upper die (22) being provided with a flange (24) delimiting the concave portion (23).

4. The method according to any one of the preceding claims, **characterised in that** the upper die (22) displaces upwards under the effect of that of the lower die (16), the displacement of the upper die (22) being less than that of the lower die (16).

5. The method according to any one of the preceding claims, **characterised in that** the method (10) comprises a third step of sintering (9) said body (30) in order to form a mineral body.

6. The method according to claim 5, **characterised in that** the method (10) comprises a fourth machining step (11) to remove an upper portion (48) of the dome (31) from the body (30), in order to obtain a through hole (32).

7. The method according to claim 6, **characterised in that** the method (10) comprises a fifth finishing step (12), for example a lapping and/or brushing and/or polishing of the mineral body.

8. A pressing device (20) for manufacturing a jewel (30), in particular for a timepiece, the device (60) comprising an upper die (22) and a lower die (16) configured to be able to displace in a housing, the dies (16, 22) defining a pressing space (25) wherein a precursor (21) can be disposed, the device (20) being provided with a wire (17) at least partially traversing the lower die (16) to open into the pressing space, the lower die (16) being able to slide around the wire (17), the upper die including a concave portion (23).
